# EUROPÄISCHE PATENTSCHRIFT

(11) **EP 1 575 870 B1**
(45) Veröffentlichungstag und Bekanntmachung des Hinweises auf die Patenterteilung: **20.10.2010**
(21) Anmeldenummer: 03789120.7
(22) Anmeldetag: 03.12.2003
(51) Int. Cl.: C01B 3/02

(54) **BLAUSÄURE AUS FORMAMID**
HYDROCYANIC ACID CONSISTING OF FORMAMIDE
ACIDE CYANHYDRIQUE OBTENU A PARTIR DE FORMAMIDE

(30) Priorität: 04.12.2002 DE 10256578
(43) Veröffentlichungstag der Anmeldung: 21.09.2005
(73) Patentinhaber: BASF SE, 67056 Ludwigshafen (DE)
(72) Erfinder: BASSLER, Peter, 68519 Viernheim (DE); SIEGEL, Wolfgang, 67117 Limburgerhof (DE); ACHHAMMER, Günther, 68309 Mannheim (DE); NEGELE, Anton, 67146 Deidesheim (DE); MENIG, Helmuth, 67159 Friedelsheim (DE); RUPPEL, Wilhelm, 68163 Mannheim (DE); ZEHNER, Peter, 67071 Ludwigshafen (DE); LUYKEN, Hermann, 67069 Ludwigshafen (DE); VOGT, Volker, 67157 Wachenheim (DE)
(86) Internationale Anmeldenummer: PCT/EP2003/013624
(87) Internationale Veröffentlichungsnummer: WO 2004/050587

(56) Entgegenhaltungen:
- EP-A- 0 209 039
- DE-B- 1 000 796
- DE-C- 477 437

## Beschreibung

Die Erfindung betrifft ein Verfahren zur Herstellung von Blausäure (HCN) durch katalytische Dehydratisierung von gasförmigem Formamid in Anwesenheit von Luftsauerstoff.

Blausäure ist eine wichtige Grundchemikalie, die als Ausgangsprodukt z.B. in zahlreichen organischen Synthesen wie der Herstellung von Methacrylsäureestern und Milchsäure, zur Herstellung von pharmazeutischen und agrochemischen Produkten, im Bergbau und in der metallurgischen Industrie eingesetzt wird.

Ein wichtiges Verfahren zur industriellen Herstellung von Blausäure ist die thermische Dehydratisierung von Formamid im Vakuum, die nach der folgenden Gleichung (I) abläuft:

HCONH₂ → HCN + H₂O (I)

Diese Umsetzung ist von der Zersetzung des Formamids gemäß folgender Gleichung (II) unter Bildung von Ammoniak und Kohlenmonoxid begleitet:

HCONH₂ → NH₃ + CO (II)

Der gebildete Ammoniak katalysiert die Polymerisation der gewünschten Blausäure und führt somit zu einer Beeinträchtigung der Qualität der Blausäure und einer Verringerung der Ausbeute an der gewünschten Blausäure.

Die Polymerisation von Blausäure und die damit verbundene Rußbildung kann durch die Zugabe von geringen Mengen Sauerstoff in Form von Luft, wie z.B. in EP-A 0 209 039 offenbart ist, unterdrückt werden. In EP-A 0 209 039 ist ein Verfahren zur thermolytischen Spaltung von Formamid an hochgesinterten Aluminiumoxid- oder Aluminiumoxid-Siliziumdioxid-Formkörpern oder an hochtemperatur-korrosionsfesten Chrom-Nickel-Edelstahl-Formkörpern offenbart. Der Formamid-Umsatz ist in diesem Verfahren nicht vollständig und des weiteren entstehen als Nebenprodukte Ammoniak und Kohlenmonoxid gemäß Gleichung (II). Somit ist eine Abtrennung und Rückführung des Rest-Formamids notwendig, wobei schwersiedende Nebenprodukte entstehen, die aus dem Verfahren abgetrennt werden müssen. Weiterhin führt die zugesetzte Luftmenge zu einer Bildung von Kohlendioxid aus dem gemäß Gleichung (II) gebildeten Kohlenmonoxid, das mit dem gleichzeitig gebildeten Ammoniak zu festen Carbamaten reagiert und so zu schwer handhabbaren Ablagerungen und zur Korrosion in den verwendeten Anlagen führt (Feststoffproblematik). Die Spaltung wird in der Regel in Edelstahl- oder Eisenrohren durchgeführt, deren genaue Zusammensetzung nicht erwähnt wird.

US 2,042,451 betrifft die Dehydratisierung von Formamid zur Herstellung von HCN. Als Katalysator dient eine geheizte Oberfläche (Messing oder Eisen), die von einer dünnen, katalytisch aktiven Oxidschicht aus Zn, Al, Mg, Cr oder Sn-Oxid überzogen ist. Der Reaktionsraum ist der Zwischenraum zwischen einem zylindrischen Metallrohr und einem zylindrischen Metallstab, der in das Rohr eingeführt wurde. Wichtig ist gemäß der Beschreibung, daß kein Teil des Gases mehr als einen 1/2 inch von der katalytischen Oberfläche entfernt ist. Mit dem Verfahren werden Umsätze von 73 bis 89%, bezogen auf Formamid, erzielt.

DE-A 1 209 561 betrifft ein Verfahren zur Herstellung von HCN durch Spalten von Formamiddampf an Ferrioxid als Katalysator, das durch teilweise oder vollständige Bindung an Säuren unter Bildung von Salzen oder durch Kombination mit einem oder mehreren nicht flüchtigen Oxiden von 1- bis 6-wertigen Metallen desaktiviert ist. Die Katalysatoren liegen als Pellets oder als im Strangpressen gefertigte Katalysatorkörner vor. Die Spaltung wird in einem Spaltofen mit Röhren aus einer Fe-Legierung durchgeführt, die zum Beispiel neben Fe 13 % Cr, 1% Al, 1% Si, < 1% Mn und ca. 0,1 % C enthält.

DE-A 1 000 796 betrifft ein Verfahren zur Spaltung von Formamiddampf, wobei einem Temperaturgefälle innerhalb der Öfen zur Spaltung dadurch Rechnung getragen wird, daß die Spaltung an stückigen oder körnigen hochgebrannten eisenoxidhaltigen Silikaten oder Spinellen in einem Spaltungsraum erfolgt, dessen Wandung eine niedrigere katalytische Aktivität besitzt als die der Katalysatoren im Spaltungsraum. Die Wandung besteht zum Beispiel aus Edelstahl, der insbesondere ca. 84% Fe und ca. 16% Cr enthält. Der Spaltungsraum wird aus von außen beheizten Röhren gebildet.

DE-A 477 437 betrifft ein Verfahren zur katalytischen Herstellung von Blausäure aus Formamid, worin Formamiddämpfe in großer Verdünnung und mit großer Geschwindigkeit in Abwesenheit von wasserabspaltenden Katalysatoren bei Temperaturen von über 300°C über Metallkatalysatoren wie Flußeisen, V2A-Stahl, Nickel oder Aluminium geleitet werden. Gemäß einer Ausführungsform wird die Reaktion in Rohren durchgeführt, die aus katalytisch wirkendem Metall hergestellt oder mit diesem ausgekleidet sind und sonst keinen Katalysator enthalten.

Eine Aufgabe der vorliegenden Erfindung ist es daher, ein Verfahren zur Herstellung von Blausäure durch katalytische Dehydratisierung von gasförmigem Formamid in Anwesenheit von Luftsauerstoff bereitzustellen, das eine hohe Selektivität zu der gewünschten Blausäure aufweist und in dem die Bildung von Ammoniak gemäß Gleichung (II) möglichst unterdrückt wird. Auf diese Weise sollen hohe Ausbeuten an Blausäure erzielt werden. Gleichzeitig soll das Verfahren bei hohen Druck/Lastverhältnissen gefahren werden können und eine Dehydratisierung bei Drucken ermöglichen, die nahe am atmosphärischen Druck liegen. Weiterhin soll ein Verfahren bereitgestellt werden, worin der Katalysator lange Standzeiten aufweist.

Die Aufgabe wird durch ein Verfahren zur Herstellung von Blausäure (HCN) durch katalytische Dehydratisierung von gasförmigem Formamid in Anwesenheit von Luftsauerstoff gelöst, wobei das erfindungsgemäße Verfahren in einem Reaktor durchgeführt wird, der eine innere Reaktoroberfläche aus einem Stahl enthaltend Eisen sowie Chrom und Nickel aufweist, wobei des Verfahren bei einem Druck von 200 bis 250 mbar durchgeführt wird, und der Reaktor keine zusätzlichen Einbauten und/oder Katalysatoren enthält.

Wird ein Reaktor mit einer inneren Reaktoroberfläche aus einem Stahl, enthaltend neben Eisen sowohl Chrom als auch Nickel eingesetzt, kann mit Hilfe des erfindungsgemäßen Verfahrens Blausäure durch katalytische Dehydratisierung von gasförmigem Formamid mit guten Umsätzen und in hohen Ausbeuten erhalten werden. Zusätzliche Einbauten und/oder zusätzliche Katalysatoren sind in dem erfindungsgemäßen Verfahren nicht erforderlich.

In dem erfindungsgemäßen Verfahren wird somit ein Reaktor eingesetzt, der keine zusätzlichen Einbauten und/oder Katalysatoren enthält, d.h., daß lediglich die innere Reaktoroberfläche als Katalysator in dem erfindungsgemäßen Verfahren wirksam ist und keine weiteren Katalysatoren zugesetzt werden.

Auf diese Weise ist es möglich, einen kostengünstigen Reaktor zur Verfügung zu stellen, der keine Einbauten aufweist. Dadurch ist der Druckverlust im Reaktor niedrig, so daß das erfindungsgemäße Verfahren ohne Umsatzverlust bei höherem Reaktionsdruck durchgeführt werden kann, so daß Kosten für aufwendige Apparaturen zur Druckverminderung gespart werden können. Des weiteren ist der in dem erfindungsgemäßen Verfahren eingesetzte Reaktor, der keine zusätzlichen Einbauten oder Katalysatoren enthält, mechanisch stabiler als ein Reaktor mit Einbauten bzw. Katalysatoren, da diese im Laufe der Reaktion verstärkt Korrosionsangriffen ausgesetzt sind. Des weiteren ist in dem erfindungsgemäßen Verfahren keine aufwendige Aktivierung der inneren Reaktoroberfläche durch Oxidations- bzw. Reduktionsschritte notwendig.

Erfindungsgemäß wurde gefunden, daß die Chemie des Stahls, aus dem die innere Reaktoroberfläche aufgebaut ist, für die katalytische Dehydratisierung von gasförmigem Formamid zu Blausäure entscheidend ist.

Bevorzugt enthält der Stahl, aus dem die innere Reaktoroberfläche aufgebaut ist, Nickel und Chrom im Verhältnis 1:1 1 bis 1:2, besonders bevorzugt 1:1,5 bis 1:2.

Der Anteil an Eisen in dem die innere Reaktoroberfläche bildenden Stahl beträgt im Allgemeinen ≥ 50 Gew.-%, bevorzugt ≥ 60 Gew.-%, besonders bevorzugt ≥ 70 Gew.-%. Der Rest sind im Allgemeinen Nickel und Chrom, wobei gegebenenfalls geringe Mengen weiterer Metalle wie Molybdän, Mangan, Silicium, Aluminium, Titan, Wolfram, Cobalt mit einem Anteil von im Allgemeinen 0 bis 5 Gew.-%, bevorzugt 0 bis 2 Gew.-% enthalten sein können.

Für die innere Reaktoroberfläche geeignete Stahlqualitäten sind im Allgemeinen Stahlqualitäten entsprechend den Normen 1.4541, 1.4571, 1.4573, 1.4580, 1.4401, 1.4404, 1.4435, 2.4816, 1.3401, 1.4876 und 1.4828. Bevorzugt werden Stahlqualitäten entsprechend den Normen 1.4541, 1.4571, 1.4828, 1.3401, 1.4876, 1.4762, besonders bevorzugt Stahlqualitäten 1.4541, 1.4571, 1.4762, 1.4828.

Das erfindungsgemäße Verfahren kann in einem breiten Belastungsbereich gefahren werden, insbesondere dann, wenn der Reaktor keine zusätzlichen Einbauten und/oder Katalysatoren enthält, was bevorzugt ist. Im Allgemeinen beträgt das Druck/Lastverhältnis 1 bis 100 kg Formamid/m² Reaktorfläche, bevorzugt 5 bis 80 kg Formamid/m² Reaktorfläche, besonders bevorzugt 10 bis 50 kg/Formamid/m² Reaktoroberfläche. Durch die durch das erfindungsgemäße Verfahren ermöglichte Fahrweise bei einem hohen Druck/Lastverhältnis ist es möglich, bei gegebener Produktkapazität kleinere Reaktoren als im Stand der Technik einzusetzen. Dadurch ist das erfindungsgemäße Verfahren besonders wirtschaftlich.

Das erfindungsgemäße Verfahren zur Herstellung von Blausäure (HCN) liefert die gewünschte Blausäure in hohen Selektivitäten von im Allgemeinen > 90%, bevorzugt ≥ 94%, und Umsätzen von im Allgemeinen >90%, bevorzugt ≥ 95%, so dass Ausbeuten von im Allgemeinen >85%, bevorzugt von > 90% erzielt werden.

In dem erfindungsgemäßen Verfahren wird gasförmiges Formamid in Anwesenheit von Luftsauerstoff, bevorzugt 10 bis 50 N1 Luft/kg Formamid, besonders bevorzugt 20 bis 30 N1 Luft/kg Formamid umgesetzt. Wird zuviel Luftsauerstoff zugesetzt, ist mit Selektivitätsverlusten zu rechnen.

Das erfindungsgemäße Verfahren wird bei einem Druck von 200 bis 250 mbar durchgeführt. Bei Drucken von ≥ 200 mbar werden in dem erfindungsgemäßen Verfahren Ausbeuten von >90% erzielt. Somit kann das Verfahren kostengünstig durchgeführt werden, da ein weniger starkes Vakuum während der Dehydratisierungsreaktion des Formamids aufrechterhalten werden muss.

Das erfindungsgemäße Verfahren wird im Allgemeinen bei einer Temperatur von 350 bis 650°C, bevorzugt 450 bis 550°C, besonders bevorzugt 500 bis 550°C durchgeführt. Werden niedrigere oder höhere Temperaturen gewählt, ist mit verschlechterten Selektivitäten und Umsätzen zu rechnen.

Die mittlere Verweilzeit an der Reaktoroberfläche beträgt im allgemeinen 0,01 bis 0,25 s, bevorzugt 0,01 bis 0,15 s.

Im Allgemeinen setzt man in dem erfindungsgemäßen Verfahren gasförmiges, überhitztes Formamid ein. Bevorzugt wird das Formamid dadurch erhalten, dass flüssiges Formamid in einem Wärmetauscher, bevorzugt einem Rohrbündelwärmetauscher, Fallfilmverdampfer oder Dünnschichtverdampfer unter vermindertem Druck von im allgemeinen 1 bis 350 mbar, bevorzugt von 100 bis 250 mbar und bei Temperaturen von im allgemeinen 100 bis 300°C, bevorzugt von 150 bis 200°C verdampft.

Anschließend wird Luft zugeführt. Der Luftanteil kann gegebenenfalls im vorgewärmten Zustand zugeführt werden.

Das Formamid bzw. das Formamid-Luft-Gemisch - unverdünnt, d.h. ohne Zusatz von Inertgasen und/oder Ammoniak - wird bei der eigentlichen Dehydratisierung auf die bereits genannten Temperaturen erhitzt und an den in dem erfindungsgemäßen Verfahren eingesetzten Katalysatoren zu Blausäure und Wasser gespalten. Bevorzugte Verweilzeiten und Drucke wurden bereits vorstehend genannt.

Ein besonderer Vorteil in dem erfindungsgemäßen Verfahren ist, dass die in dem erfindungsgemäßen Verfahren als Katalysator genutzte Reaktorinnenwand auch nach langen Standzeiten noch hochselektiv ist und gute Umsätze und somit gute Ausbeuten in den vorstehend genannten Größenordnungen erzielt werden. Im allgemeinen betragen die Standzeiten der Katalysatoren 500 bis 8000 Stunden, bevorzugt 1000 bis 3000. Dadurch ist das erfindungsgemäße Verfahren sehr wirtschaftlich, da ein häufiges Abstellen des Reaktors zur Regenerierung des Katalysators und ein damit verbundener Produktausfall vermieden wird.

Ein weiterer Gegenstand der vorliegenden Anmeldung ist die Verwendung eines Reaktors wobei der Reaktor eine innere Reaktoroberfläche aus einem Stahl enthaltend Eisen sowie Chrom und Nickel aufweist, in einem Verfahren zur Herstellung von Blausäure durch katalytische Dehydratisierung von gasförmigem Formamid. Durch Einsatz des Reaktors in dem Verfahren zur Herstellung von Blausäure kann Blausäure aus Formamid mit hohen Selektivitäten und Umsätzen in guten Ausbeuten gewonnen werden. Zusätzliche Einbauten und/oder Katalysatoren im Reaktor sind nicht erforderlich. Bevorzugte Nickel/Chrom-Verhältnisse und Anteile an Eisen sowie weiterer Komponenten des die innere Reaktoroberfläche bildenden Stahls sind bereits vorstehend genannt. Bevorzugt ist der erfindungsgemäße Reaktor ein Rohrreaktor, der ein oder mehrere Rohre aufweist.

Die nachfolgenden Beispiele erläutern die Erfindung zusätzlich.

### Beispiele

### Beispiel 1

Ein Rohrreaktor (1.4541 (V2A-Stahl), Länge 400 mm, Durchmesser 6 mm) wird auf 520°C beheizt und ein gasförmiger Formamidstrom (FA) von 100 g/h bei einem Druck von 230 mbar und Zugabe von 24 Nl/kg FA Luft hindurchgeleitet. Es resultiert eine HCN-Selektivität von 94% und ein FA-Umsatz von 95% über 3000 h.

### Beispiel 2

Ein Rohrreaktor (1.4541, Länge 400 mm, Durchmesser 6 mm) wird auf 520°C beheizt und ein gasförmiger Formamidstrom (FA) von 200 g/h bei einem Druck von 450 mbar und Zugabe von 24 Nl/kg FA Luft hindurchgeleitet. Es resultiert eine HCN-Selektivität von 93,5% und ein FA-Umsatz von 81%.

### Beispiel 3

Ein Rohrreaktor (1.4541, Länge 400 mm, Durchmesser 6 mm) wird auf 520°C beheizt und ein gasförmiger Formamidstrom (FA) von 300 g/h bei einem Druck von 600 mbar und Zugabe von 24 Nl/kg FA Luft hindurchgeleitet. Es resultiert eine HCN-Selektivität von 93,5% und ein FA-Umsatz von 70%.

### Beispiel 4 (Vergleichsbeispiel)

Ein Rohrreaktor (1.4541, Länge 400 mm, Durchmesser 6 mm) wird auf 520°C beheizt und ein gasförmiger Formamidstrom (FA) von 100 g/h bei einem Druck von 230 mbar hindurchgeleitet und keine Luft zugegeben. Es resultiert eine HCN-Selektivität von 96% und ein FA-Umsatz von anfänglich 90%, der innerhalb von 300 h Betriebsdauer auf 85% abfällt.

### Beispiel 5

Ein Rohrreaktor (1.4541, Länge 400 mm, Durchmesser 6 mm) wird auf 520°C beheizt und ein gasförmiger Formamidstrom (FA) von 100 g/h bei einem Druck von 230 mbar hindurchgeleitet und 12,5 Nl Luft/kg FA zugegeben. Es resultiert eine HCN-Selektivität von 95% und ein FA-Umsatz von anfänglich 92%, der innerhalb von 500 h Betriebsdauer auf 85% abfällt.

### Beispiel 6

Ein Rohrreaktor (1.4541, Länge 400 mm, Durchmesser 6 mm) wird auf 600°C beheizt und ein gasförmiger Formamidstrom (FA) von 100 g/h bei einem Druck von 230 mbar hindurchgeleitet und 24 N1 Luft/kg FA zugegeben. Es resultiert eine HCN-Selektivität von 90% und ein FA-Umsatz von 97%.

### Beispiel 7

Ein Rohrreaktor (1.4541, Länge 400 mm, Durchmesser 6 mm) wird auf 450°C beheizt und ein gasförmiger Formamidstrom (FA) von 100 g/h bei einem Druck von 230 mbar hindurchgeleitet und 24 Nl Luft/kg FA zugegeben. Es resultiert eine HCN-Selektivität von 90% und ein FA-Umsatz von 85%.

### Beispiel 8

Ein Rohrreaktor (1.4571, Länge 400 mm, Durchmesser 6 mm) wird auf 520°C beheizt und ein gasförmiger Formamidstrom (FA) von 100 g/h bei einem Druck von 230 mbar hindurchgeleitet und 24 Nl Luft/kg FA zugegeben. Es resultiert eine HCN-Selektivität von 94% und ein FA-Umsatz von 95%.

### Beispiel 9

Ein Rohrreaktor (1.3401, Länge 400 mm, Durchmesser 6 mm) wird auf 520°C beheizt und ein gasförmiger Formamidstrom (FA) von 100 g/h bei einem Druck von 230 mbar hindurchgeleitet und 24 Nl Luft/kg FA zugegeben. Es resultiert eine HCN-Selektivität von 91% und ein FA-Umsatz von 94%.

### Beispiel 10

Ein Rohrreaktor (1.4876, Länge 400 mm, Durchmesser 6 mm) wird auf 520°C beheizt und ein gasförmiger Formamidstrom (FA) von 100 g/h bei einem Druck von 230 mbar hindurchgeleitet und 24 Nl Luft/kg FA zugegeben. Es resultiert eine HCN-Selektivität von 90% und ein FA-Umsatz von 90%.

### Beispiel 11

Ein Rohrreaktor (1.4828, Länge 400 mm, Durchmesser 6 mm) wird auf 520°C beheizt und ein gasförmiger Formamidstrom (FA) von 100 g/h bei einem Druck von 230 mbar hindurchgeleitet und 24 Nl Luft/kg FA zugegeben. Es resultiert eine HCN-Selektivität von 94% und ein FA-Umsatz von 91 %.

### Beispiel 12

Ein 4,5 m langes Reaktionsrohr aus 1.4541 mit einem Innendurchmeser von 10 mm und einem Außendurchmesser von 12 mm wird elektrisch auf eine konstante Außentemperatur von 520°C gebracht. Das Reaktionsrohr besitzt eine spezifische Oberfläche von 400 m²/m³. Der Innendruck im Rohr beträgt 200 mbar abs. und wird durch eine Vakuumpumpe erzeugt.

In einem vorgeschalteten Verdampfer, der ebenfalls unter dem Reaktionsdruck steht, werden 1,3 kg/h Formamid bei 210°C verdampft und auf den Kopf des Reaktionsrohres geleitet. Zusätzlich wird an der Verbindung zwischen Verdampfer und Reaktorrohr 13 Nl Luft/h eingespeist.

Am Ende des Reaktionsrohres wird eine Probe genommen und diese auf ihre Bestandteile analysiert. Die Analyse ergab einen Umsatz des Formamids von 98,52% und eine Blausäureselektivität bez. auf Formamid von 93,21%.

### Beispiel 13

Ein 4,5 m langes Reaktionsrohr aus 1.4541 mit einem Innendurchmeser von 10 mm und einem Außendurchmesser von 12 mm wird elektrisch auf eine konstante Außentemperatur von 520°C gebracht. Das Reaktionsrohr besitzt eine spezifische Oberfläche von 400 m²/m³. Der Innendruck im Rohr beträgt 200 mbar abs. und wird durch eine Vakuumpumpe erzeugt. In einem vorgeschalteten Verdampfer, der ebenfalls unter dem Reaktionsdruck steht, werden 2,2 kg/h Formamid bei 210°C verdampft und auf den Kopf des Reaktionsrohres geleitet. Zusätzlich wird an der Verbindung zwischen Verdampfer und Reaktorrohr 18 Nl Luft/h eingespeist.

Am Ende des Reaktionsrohres wird eine Probe genommen und diese auf ihre Bestandteile analysiert. Die Analyse ergab einen Umsatz des Formamids von 97,12% und eine Blausäureselektivität bez. auf Formamid von 94,74%.

### Beispiel 14

Ein 4,5 m langes Reaktionsrohr aus 1.4541 mit einem Innendurchmeser von 10 mm und einem Außendurchmesser von 12 mm wird elektrisch auf eine konstante Außentemperatur von 500°C gebracht. Das Reaktionsrohr besitzt eine spezifische Oberfläche von 400 m²/m³. Der Innendruck im Rohr beträgt 200 mbar abs. und wird durch eine Vakuumpumpe erzeugt.

In einem vorgeschalteten Verdampfer, der ebenfalls unter dem Reaktionsdruck steht, werden 2,4 kg/h Formamid bei 210°C verdampft und auf den Kopf des Reaktionsrohres geleitet. Zusätzlich wird an der Verbindung zwischen Verdampfer und Reaktorrohr 18 Nl Luft/h eingespeist.

Am Ende des Reaktionsrohres wird eine Probe genommen und diese auf ihre Bestandteile analysiert. Die Analyse ergab einen Umsatz des Formamids von 94,00% und eine Blausäureselektivität bez. auf Formamid von 93,85%.

### Beispiel 15

Das Verfahren zur Herstellung von Blausäure aus Formamid wurde unter den Reaktionsbedingungen von Beispiel 1 wiederholt, wobei die katalytisch aktive Reaktorwand mit den in Tabelle 1 genannten verschiedenen Werkstoffen ausgekleidet war.

| Werkstoff | Zusammensetzung | FA¹⁾-Umsatz | HCN-Selektivität | HCN-Ausbeute |
|---|---|---|---|---|
| V2A-Stahl (1.4541) | 74% Fe, 9% Ni, 17% Cr | 94% | 94% | 88,4% |
| Kupfer | 100% Cu | 4% | 62% | 2,5% |
| Nickel | 100% Ni | 53% | 40% | 21,2% |
| Aluminium | 100% Al | 45% | 97% | 43,7% |
| Alloy 601 (2.4851) | 60% Ni, 23% Cr, 14% Fe | 78% | 91% | 71% |
| Alloy 800 H (1.4876) | 30% Ni, 19% Cr, 51% Fe | 90% | 90% | 81% |
| HT-Stahl (1.4828) | 11% Ni, 19% Cr, 70% Fe | 91% | 94% | 85,5% |
| HT-Stahl (1.4841) | 19% Ni, 24% Cr, 57% Fe | 77% | 94% | 72,4% |
| Sicromal 12(1.4762) | 26% Cr, 1,7% Al, 1,4% Si, 71 % Fe | 65% | 93% | 60,5% |
| Chrom | 100% Cr | 88% | 83% | 73% |
| Alonisierter (1.4541) | AL-Oberfläche, Basis: 1.4541 | 11% | 15% | 1,7% |
| Quarz | | 14% | 31% | 4,3% |
| Eisen | 100% Fe | 97% | 90% | 87,3% |
| V4A-Stahl (1.4571) | 71% Fe, 10,5% Ni, 16,5% Cr, 2% Mo | 91% | 92,5% | 84,2% |

| | | | | |
|---|---|---|---|---|
| ¹⁾ FA Formamid | | | | |

## Patentansprüche

1. Verfahren zur Herstellung von Blausäure (HCN) durch katalytische Dehydratisierung von gasförmigem Formamid in Anwesenheit von Luftsauerstoff in einem Reaktor, der eine innere Reaktoroberfläche aus einem Stahl enthaltend Eisen sowie Chrom und Nickel aufweist, wobei das Verfahren bei einem Druck von 200 bis 250 mbar durchgeführt wird, und der Reaktor keine zusätzlichen Einbauten und/oder Katalysatoren enthält.

2. Verfahren nach Anspruch 1, **dadurch gekennzeichnet, dass** der Stahl Nickel und Chrom im Gewichtsverhältnis 1:1 bis 1:2 enthält.

3. Verfahren nach Anspruch 1 oder 2, **dadurch gekennzeichnet, dass** die innere Reaktoroberfläche aus einem Stahl enthaltend ≥ 60 Gew.-% Eisen aufgebaut ist.

4. Verfahren nach einem der Ansprüche 1 bis 3, **dadurch gekennzeichnet, dass** das Druck/Lastverhältnis 1 bis 100 kg Formamid/m² Reaktorfläche, bevorzugt 5 bis 80 kg Formamid/m² Reaktoroberfläche beträgt.

5. Verfahren nach einem der Ansprüche 1 bis 4, **dadurch gekennzeichnet, dass** die Herstellung der Blausäure in Anwesenheit von 10 bis 50 Nl Luft/kg Formamid, erfolgt.

6. Verfahren nach einem der Ansprüche 1 bis 5, **dadurch gekennzeichnet, dass** das Verfahren bei einer Temperatur von 350 bis 650°C durchgeführt wird.

7. Verfahren nach einem der Ansprüche 1 bis 6, **dadurch gekennzeichnet, dass** der Reaktor ein Rohrreaktor ist, der ein oder mehrere Rohre aufweist.

8. Verfahren nach einem der Ansprüche 1 bis 7, **dadurch gekennzeichnet, dass** das Verfahren bei einer Temperatur von 500 bis 550°C durchgeführt wird.

9. Verwendung eines Reaktors mit einer inneren Reaktorobrfläche aus einem Stahl enthaltend Eisen sowie Chrom und Nickel in einem Verfahren zur Herstellung von Blausäure durch katalytische Dehydratisierung von gasförmigem Formamid gemäß einem der Ansprüche 1 bis 8.

## Claims

1. A process for preparing hydrocyanic acid (HCN) by catalytic dehydration of gaseous formamide in the presence of atmospheric oxygen in a reactor which has an inner reactor surface made of a steel comprising iron and chromium and nickel, wherein the process is carried out at a pressure of from 200 to 250 mbar and the reactor contains no additional internals and/or catalysts.

2. The process according to claim 1, wherein the steel contains nickel and chromium in a weight ratio of from 1:1 to 1:2.

3. The process according to claim 1 or 2, wherein the inner reactor surface is made of a steel comprising ≥ 60% by weight of iron.

4. The process according to any of claims 1 to 3, wherein the pressure/load ratio is from 1 to 100 kg of formamide/m² of reactor surface, preferably from 5 to 80 kg of formamide/m² of reactor surface.

5. The process according to any of claims 1 to 4, wherein the preparation of hydrocyanic acid is carried out in the presence of from 10 to 50 standard 1 of air/kg of formamide.

6. The process according to any of claims 1 to 5 carried out at from 350 to 650°C.

7. The process according to any of claims 1 to 6, wherein the reactor is a tube reactor having one or more tubes.

8. The process according to any of claims 1 to 7 carried out at from 500 to 550°C.

9. The use of a reactor having an inner reactor surface made of a steel comprising iron and chromium and nickel in a process for preparing hydrocyanic acid by catalytic dehydration of gaseous formamide according to any of claims 1 to 8.

## Revendications

1. Procédé pour la production d'acide cyanhydrique (HCN) par déshydratation catalytique de formamide gazeux, en présence d'oxygène de l'air dans un réacteur qui comporte une surface interne du réacteur en un acier contenant du fer ainsi que du chrome et du nickel, le procédé étant effectué sous une pression de 200 à 250 mbars, et le réacteur ne contenant pas d'inserts supplémentaires et/ou de catalyseurs.

2. Procédé selon la revendication 1, **caractérisé en ce que** l'acier contient du nickel et du chrome en un rapport pondéral de 1:1 à 1:2.

3. Procédé selon la revendication 1 ou 2, **caractérisé en ce que** la surface interne du réacteur est constituée d'un acier contenant ≥ 60 % en poids de fer.

4. Procédé selon l'une quelconque des revendications 1 à 3, **caractérisé en ce que** le rapport pression/charge vaut de 1 à 100 kg de formamide/m² de surface du réacteur, de préférence de 5 à 80 kg de formamide/m² de surface du réacteur.

5. Procédé selon l'une quelconque des revendications 1 à 4, **caractérisé en ce que** la production de l'acide cyanhydrique s'effectue en présence de 10 à 50 litres normaux d'air par kg de formamide.

6. Procédé selon l'une quelconque des revendications 1 à 5, **caractérisé en ce que** le procédé est effectué à une température de 350 à 650 °C.

7. Procédé selon l'une quelconque des revendications 1 à 6, **caractérisé en ce que** le réacteur est un réacteur tubulaire qui comporte un ou plusieurs tubes.

8. Procédé selon l'une quelconque des revendications 1 à 7, **caractérisé en ce que** le procédé est effectué à une température de 500 à 550°C.

9. Utilisation d'un réacteur comportant une surface interne du réacteur en un acier contenant du fer ainsi que du chrome et du nickel, dans un procédé pour la production d'acide cyanhydrique par déshydratation catalytique de formamide gazeux selon l'une quelconque des revendications 1 à 8.
